# FASCICULE DE BREVET EUROPEEN

(11) **EP 0 923 297 B1**
(45) Date de publication et mention de la délivrance du brevet: **12.11.2003**
(21) Numéro de dépôt: 97937623.3
(22) Date de dépôt: 12.08.1997
(51) Int. Cl.: A21D 13/08

(54) **COMPOSITION ET PROCEDE POUR "FLOQUAGE" DE BISCUITS ET D'AUTRES PRODUITS ALIMENTAIRES A BASE DE PATES**
ZUSAMMENSETZUNG UND VERFAHREN ZUR ÜBERZIEHUNG VON KEKSEN UND VON WEITERE NAHRUNGSMITTELN AUF TEIGBASIS
COMPOSITION AND METHOD FOR FLOCKING OF BISCUITS AND OF OTHER DOUGH BASED FOOD PRODUCTS

(30) Priorité: 14.08.1996 FR 9610268
(43) Date de publication de la demande: 23.06.1999
(73) Titulaire: Grollet, Jean, 42100 Saint Etienne (FR)
(72) Inventeur: Grollet, Jean, 42100 Saint Etienne (FR)
(74) Mandataire: Richebourg, Michel François
(86) Numéro de dépôt international: FR9701485
(87) Numéro de publication internationale: WO98006270

(56) Documents cités:
- EP-A- 0 147 876
- EP-A- 0 537 554
- WO-A-94/04039
- DE-A- 3 213 920
- FR-A- 2 532 155
- DATABASE WPI Section Ch, Week 8117 Derwent Publications Ltd., London, GB; Class B07, AN 81-29959D XP002030624 & JP 56 023 881 A (SAN-EI CHEM IND LTD) , 6 mars 1981
- DATABASE WPI Section Ch, Week 8916 Derwent Publications Ltd., London, GB; Class D11, AN 89-118219 XP002030625 & JP 01 063 338 A (KAO CORP) , 9 mars 1989

## Description

La présente invention concerne une nouvelle composition pour le " floquage chocolat " de tous supports alimentaires, y compris « tendres », notamment les biscuits et produits analogues.

Par " floquage ", on désignera ici toutes les opérations visant à recouvrir en tout ou en partie un produit alimentaire par une couche d'une composition également alimentaire. Ce vocable comprendra donc le nappage, l'enrobage etc...

Par " floquage chocolat ", on désignera les compositions comportant du cacao, beurre de cacao et autres compositions analogues, ainsi par extension que les compositions alimentaires ou décoratives ou protectrices par exemple à base de sucres, sirops, caramels, crèmes alcoolisées ou non, et analogues connues de l'homme de métier.

L'invention s'applique au secteur technique du " floquage " ou " floquage chocolat ", compris dans les sens ci-dessus, de produits alimentaires « durs » ou « tendres » comme les biscuits, pâtisseries, produits de boulangerie et viennoiseries et analogues.

L'invention sera décrite plus en détail en relation avec le floquage des biscuits ou génoises, qui sont des produits support « tendres », mais naturellement à titre non limitatif.

L'état actuel de la technique consiste à déposer une couche de composition de type " chocolat " ou autre analogue, par des moyens tels que le trempage, l'enrobage par d'autres moyens, le dépôt par versement etc... Par ces techniques connues, on obtient des couches qui sont souvent relativement épaisses (sauf à réduire l'épaisseur par des opérations supplémentaires donc industriellement coûteuses) et d'épaisseur souvent mal contrôlée.

Ce défaut de maîtrise de l'épaisseur entraîne des irrégularités et, ce qui est beaucoup plus dommageable pour l'industrie, l'emploi d'une quantité de composition plus importante que nécessaire (par sécurité) ce qui entraîne un surcoût évident. De plus, cette technique ne permet pas le traitement des reliefs du support.

Selon ces techniques, la précision de l'application est naturellement faible, en termes de positionnement de la couche.

Le brevet JP 56 02 38 81 décrit des solutions aqueuses ou alcooliques ou alcooliques aqueuses à moins de 20% d'éthanol d'un glucane à chaînes glucose latérales, afin d'obtenir un revêtement sur des produits alimentaires et pharmaceutiques.

Le brevet WO 9 404 039 décrit des produits pour apéritif et analogues, de type « snack », comme des chips, crackers etc..., et plus précisément un adhésif permettant de faire adhérer un « assaisonnement ». Un adhésif préféré comporte une graisse comestible, et un mélange glucose et glycérol.

Le brevet JP 87 02 21 470 décrit des revêtements d'esters de glycérol pour former des capsules hydrophobes sur une gomme arabique ou analogue sur laquelle on a au préalable adsorbé des alcools aliphatiques. L'objet est de produire des compositions a base de huile et graisse pour recouvrir ou fourrer des biscuits.

Le brevet FR 2 532 155 décrit des gelées à faible teneur en sucre, refroidies au tunnel puis enrobées de chocolat, pour fabriquer des tartes notamment sans imprégner la pâte.

Le brevet DE 32 13 920 décrit un procédé et appareillage de pulvérisation de divers produits tels que glaçage, « fondant », masse chocolat et analogues, sur des biscuits chocolatés. Le document décrit une installation mobile et régulée pratiquement sans intervention humaine.

Par ailleurs, on ne parvient pas à enrober de produit support « mou ». les techniques actuelles utilisent en effet couramment des « turbines » qui sont des récipients rotatifs inclinés à 45° et que l'on charge avec le produit à enrober, puis avec la charge d'enrobage. On met en rotation, on chauffe la plupart du temps, et on sort le produit enrobé. Pour les amandes, dragées, pralins, et analogues, on peut obtenir un aspect brillant par un enrobage supplémentaire de talc ou par l'application séparée d'un vernis.

Par contre, cette technique est impropre au traitement des produits tendres comme les biscuits, les gâteaux, sujets en chocolats et analogues qui s'émiettent et collent.

L'invention convient au contraire aussi bien pour les produits tendres que pour les produits durs.

Un inconvénient bien connu également des techniques actuelles réside dans le rancissement (présence de graisses ou de lait entrant dans la composition du produit) qui en limite très fortement la durée de commercialisation.

D'autre part, les procédés actuels confèrent au produit un toucher " gras " désagréable pour le consommateur.

Pour l'industriel, un autre inconvénient majeur réside dans le fait que les compositions actuelles sont très sensibles à la chaleur. Si la température est trop faible, l'application ne se fait pas ou dans de très mauvaises conditions par défaut de fluidité. Si la température est trop élevée ou trop faible, la composition est dénaturée et notamment peut blanchir.

En pratique, l'homme du métier sait que l'industriel doit respecter impérativement une plage de seulement quelques degrés, très exactement définie pour les compositions habituelles de " chocolat " à 29 - 32°C.

L'étroitesse de cette plage entraîne naturellement des contraintes lourdes en matière de systèmes de contrôle et d'asservissement des équipements industriels.

Un blanchiment, provoqué par les variations de température, est également observé avec le temps, ce facteur limitant également la durée de commercialisation du produit, et altérant son goût.

Ces inconvénients sont naturellement bien identifiés et, depuis plusieurs décennies, notamment depuis l'apparition de la biscuiterie dite " industrielle ", des améliorations ont été apportées mais néanmoins sans progrès décisif.

Notamment, malgré les inconvénients connus, l'industrie n'a pas pu s'affranchir des inconvénients rappelés ci-dessus, ni des contraintes sévères de température en matière d'application et de conservation.

Il existe donc un besoin important tant au niveau de la biscuiterie dite " industrielle ", y compris la "viennoiserie" et les produits de boulangerie, que des produits de pâtisserie.

Il est tout à fait étonnant de constater que l'invention apporte une solution d'ensemble à tous les problèmes énoncés ci-dessus.

Comme cela sera décrit, l'invention permet en effet que la plage d'application des compositions de type " chocolat " soit portée à 29 - 39 °C, cette augmentation de sept degrés de la tolérance en température représentant pour l'industriel un progrès absolument considérable, qu'il convient de mesurer à sa juste valeur ; la durée de commercialisation est augmentée de plusieurs jours, ou de plusieurs semaines, voire de plusieurs mois selon le type de produit traité, ce qui représente également un progrès déterminant ; au plan purement commercial, la couche déposée présente un aspect brillant très attractif (que l'on peut moduler de brillant à brillant plus mat) et ne présente pas de toucher "gras" ; enfin, selon le produit traité, le rancissement se produit beaucoup moins rapidement.

Cet ensemble de propriétés, dont certaines conduisent à l'apparition sur le marché de produits radicalement nouveaux, est obtenu selon un mode préféré par un procédé selon lequel on pulvérise ou atomise sur la couche de floquage une composition caractérisée par la présence simultanée d'un alcool de qualité alimentaire et d'ingrédient(s) désigné(s) ci après par gomme laque solubles dans l'alcool, constitués de certaines matières spécifiques d'origine végétale.

Selon cette variante préférée de l'invention, il est nécessaire de ménager un certain temps de contact entre la couche de floquage et la couche de surface pour laisser le temps à une réaction de s'établir entre les deux couches.

Sans vouloir être limitée par une quelconque théorie, la demanderesse pense en effet que l'aspect de surface obtenu, ainsi que la texture finale obtenue, ne peuvent s'expliquer que par l'établissement d'une telle réaction.

De manière tout à fait préférée, la composition de surface sera déposée par pulvérisation ou atomisation sur la couche de floquage, cette technique autorisant une grande précision et favorisant l'évaporation rapide du composant alcoolique.

Il est possible que cette évaporation intervienne directement ou indirectement dans la réaction, bien que l'alcool s'évapore très rapidement.

L'invention peut également être employée pour conférer le degré d'imperméabilisation (ou de résistance à la prise d'eau ou de vapeur d'eau ou d'humidité ambiante) souhaité à des produits tels que les gaufres ou toute autre pâte "humide" et analogues. Dans cette application également très intéressante on pourra appliquer une composition d'alcool et de gomme laque pour former un revêtement mince qui, en fait, résulte de la réaction de la composition pulvérisée avec certains constituants de la pâte. Ce " revêtement " peut, de par sa formation par une réaction de nature chimique, être si mince qu'il prend plus la forme d'un " traitement de surface " (modifiant la couche surfacique de la gaufre ou de tout autre produit considéré ici) que d'un " revêtement " au sens propre.

L'invention permet l'application de la composition avec une très grande précision, tant du point de vue du dosage que du point de vue de la disposition en surface. On peut ainsi déposer l'atomisat selon l'invention sur un biscuit se trouvant dans son papier d'emballage, sans souiller ce dernier, à condition de prendre quelques précautions élémentaires. On limite aussi les pertes de produit autour de la pâtisserie traitée. Des effets décoratifs deviennent possibles.

L'invention présente encore l'avantage de conduire à un produit intégralement naturel.

Naturellement, en fonction des applications envisagées, l'invention peut également utiliser n'importe lequel des additifs classiques de qualité alimentaire utilisés par l'homme de métier.

L'invention concerne également la composition destinée à être pulvérisée sur une couche de floquage, selon un mode préféré de réalisation, et qui est caractérisée en ce qu'elle comprend au moins un alcool de qualité alimentaire et au moins une gomme laque de qualité alimentaire tel que défini ci-dessous.

Les alcools de ce type sont connus et seront choisis parmi les alcools alimentaires dits « neutres », c'est-à-dire constitués d'alcool et d'une faible proportion d'eau. On pourra ajouter des arômes voire des colorants naturels compatibles avec l'alcool, et notamment qui devront y être solubles.

Les « adjuvants végétaux » utilisés selon l'invention sont constitués par une sélection de produits de type « gomme-laque ». On sait que ces produits sont obtenus à partir d'une exsudation résineuse qui se solidifie sur les jeunes branches de végétaux tels que Rhamus jujuba et Fucus rengiosa. La gomme-laque est un produit connu en soi et qui peut être soit une gomme brune soit une gomme blanche éventuellement en poudre ou en « paillettes » pour la gomme brune (ou encore « blonde »). Les gommes laques sont solubles dans l'alcool, ce qui est un critère essentiel selon l'invention. Ce critère exclut notamment les revêtements connus à base de sucres, ou encore le vernissage au talc réalisé en turbine.

La gomme laque et l'alcool sont, de manière surprenante, les deux composants essentiels de l'invention.

D'autres combinaisons ont en effet été tentées sur la base des connaissances de l'art antérieur, comme :
alcool + gomme laque + sucre >>> revêtement collant et séchage long ;
alcool + gomme laque + glycérine >>> il se produit une réaction donnant un résultat collant et un goût extrêmement désagréable.

On pourra éventuellement incorporer d'autres produits végétaux et, de manière préférée, le Baume du Pérou (à forte odeur aromatique et conférant une coloration brun-rougeâtre) et/ou le Benjoin (à odeur vanillée agréable .

Le Baume du Pérou est insoluble dans l'eau mais est soluble dans l'alcool absolu en toutes proportions, et se présente sous la forme d'un liquide sirupeux, extrait notamment du Toluifera pereirae.

Le Benjoin est un baume naturel produit par le Styrax benzoin, soluble dans l'alcool et qui fond par la chaleur.

Comme indiqué ci-dessus, la demanderesse a constaté la formation selon la variante préférée de l'invention d'une structure totalement originale qu'elle attribue, sans vouloir être limitée par une théorie quelconque, à une réaction ou modification de surface entre la composition alcoolique d'adjuvants végétaux et le substrat traité. L'alcool semble remplir une fonction essentielle, ainsi probablement que le mode d'application par atomisation ou pulvérisation, qui en favorise l'évaporation rapide. Cependant, il est probable que le ou les adjuvants coopèrent avec l'ensemble. L'homme de métier saura déterminer par des essais simples de routine quels sont les adjuvants qui remplissent cette fonction de coopération avec l'alcool.

L'invention concerne également un appareillage pour le " floquage " de biscuits, pâtisseries, « viennoiseries », produits de boulangerie, produits à pâte humide, et analogues, caractérisé en ce qu'il comporte, après les moyens de mise en oeuvre de l'opération de floquage, un moyen d'application d'une composition alcoolique d'au moins un " adjuvant végétal " réactif tel que défini ci-dessus sur la couche de floquage, puis un temps de contact suffisant avant l'opération d'emballage pour laisser se former une structure légèrement rigide.

Par " légèrement rigide ", on désignera l'obtention d'une surface très légèrement craquante, ou bien non craquante, non-grasse au toucher, de brillante à brillante-mat.

Le caractère craquant et le caractère brillant ou mat (aspect chocolat) peuvent être ajustés par la proportion de gomme laque selon des essais de routine.

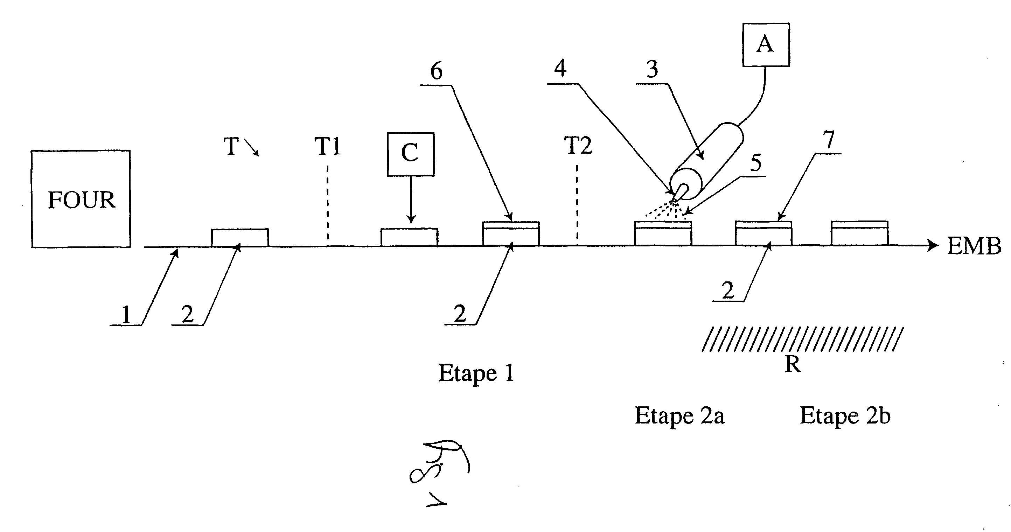

On a représenté sur la Figure unique le mode de mise en oeuvre préféré du procédé selon l'invention.
**1ère étape** : A la sortie du four de cuisson, le biscuit (ou analogue) est amené (2) sur un tapis (1) dans une zone où, à la température T1 (connue de l'homme de métier) il reçoit le " floquage chocolat ", à partir d'une cuve chauffante et d'équipements de transfert tels que pompe, etc... , dans la plage rendue accessible de manière surprenante selon l'invention, de 29-39°C, par un moyen de pulvérisation ou atomisation représenté globalement par " C ". Le biscuit (2) portant le floquage (6) passe alors dans un tunnel de refroidissement pour parvenir à la température T2, qui est celle de la consistance naturelle du chocolat, soit environ 18 à 20°C.
   On pourra prévoir un élément de refroidissement (non représenté) du support (2), jusqu'à des températures de 0°C ou inférieures, pour obtenir des aspects spéciaux du type « velours» ; il convient de noter que l'obtention de tels effets très attractifs est impossible, avec les techniques actuelles, à l'échelle industrielle.
**2ème étape :**
   **2a)** Par des moyens connus ou à la portée de l'homme de métier, globalement représentés par " A ", on apporte la composition selon l'invention (selon le mode de mise en oeuvre particulièrement préféré) à une ou plusieurs buses d'application (3, 4) mobiles et commandées en position, et on procède à la pulvérisation ou atomisation de la composition (5) selon l'invention.
      Naturellement, ces équipements sont thermo-régulés.
      Ces éléments d'application sont semblables ou identiques au moyen " C " de l'application du floquage.
      Au niveau de la buse ou atomiseur (3, 4), on prévoira un tapis à mailles inox avec retour par nettoyage sur base alcool, et de préférence une hotte d'aspiration pour éliminer/récupérer les brouillards.
   **2b)** Le biscuit (2) portant le floquage « traité » (7) traverse alors une zone de réaction " R " éventuellement ventilée durant un temps suffisant pour que l'alcool soit évaporé et pour que se produise simultanément la réaction de surface précitée. Selon le produit considéré, le temps de séjour sera de l'ordre de quelques secondes à quelques dizaines de secondes.

L'élimination de l'alcool est très rapide (quelques secondes). Ici encore, des essais simples permettront à l'homme de métier de déterminer le temps de séjour approprié.

On notera que, aussi bien dans le choix des adjuvants que des conditions précises de mise en oeuvre, l'homme de métier pourra apporter son propre savoir-faire, pour obtenir un produit plus ou moins craquant, plus ou moins brillant ou mat, plus ou moins aromatisé ou coloré, etc..... et donc bien adapté à sa clientèle. C'est aussi l'une des raisons pour lesquelles, une fois posé le concept inventif de dépôt d'une composition alcoolique réactive d'« adjuvant(s) végétal(aux ) » sur le floquage, il est impossible de définir tous les modes de mise en oeuvre de l'invention.

Le biscuit floqué atteint ensuite la zone d'emballage EMB.

On donnera ci-dessous un exemple de composition de " floquage chocolat " :

### A. Composition de floquage :

Produit de base de chocolat, beurre de cacao, matières grasses végétales, avoisinant un pourcentage de 40 % de cacao (les essais ont été reproduits avec des résultats comparables à 20 et 45 % de cacao).Les pourcentages de cacao et de beurre de cacao peuvent donc être ajustés pour obtenir la qualité désirée et s'adapter aux normes en vigueur.

Un exemple préféré de composition de floquage est le suivant : il s'agit d'une combinaison qui permet de recourir à un procédé de pulvérisation ou atomisation :
1 kg de pâte à glacer noire connue de l'homme du métier
400 g de « couverture » également connue (beurre de cacao, cacao et sucre)
150 g de graisse végétale qui modifie la texture et apporte la saveur selon le point de fusion de la graisse.

On pourra par des essais de routine rechercher la meilleure combinaison, éventuellement, si l'on recherche un aspect spécial type velours ou analogue, entre le choix de la température d'application dans la plage 29 - 39°C et la température du support (2) éventuellement refroidi comme indiqué plus haut.

On notera que les techniques antérieures utilisent une pâte à glacer ou une couverture diluée au beurre de cacao ou une couverture diluée à l'huile de mais ou d'arachide ou de tournesol, génératrice de rancissement.

On pourra également, selon l'invention, combiner selon les besoins et les objectifs industriels un enrobage normal suivi d'une pulvérisation du floquage.

### Aspect physique :

A froid, consistance supérieure aux pâtes à glacer traditionnelles.

Température d'utilisation (comprise entre 29 et 39°C) : fluidité permettant une application aisée avec des moyens techniques assurant la productivité quelle que soit la cadence nécessitée par les industriels. Cette plage élargie de 29 à 39°C est obtenue grâce à la mise en oeuvre d'un moyen d'application original, lequel fait expressément partie de l'invention, et qui consiste en moyens de pulvérisation ou atomisation identiques ou semblables aux moyens (3, 4, 5) de l'étape 2 a.

Cette pulvérisation autorise le traitement correct des reliefs du support, ce qui est impossible avec les techniques antérieures.

### Valeur gustative :

Goût plus prononcé de chocolat fin, moins pâteux au palais et sans arrière-goût désagréable, le tout pouvant être adapté par l'homme de métier (arômes, etc...).

### Couleur :

Possibilité d'un noir franc d'un chocolat haut de gamme.

La composition réactive de traitement selon l'invention répond, dans son mode tout à fait préféré de réalisation, à la définition ci-dessous :

### B. Composition alcoolique :

Produit à base d'alcool neutre et d'au moins un adjuvant végétal tel que défini ci-dessus, 100 % naturel, titre alcoolique de l'ordre de 96 % ou éventuellement plus faible (85 %).

Un exemple de composition préférée sera :
750 g d'alcool à 96°
350 g de gomme laque
donnant un titre au réfractomètre SS (solution sèche) de 40 - 45 °.

L'augmentation de la proportion de gomme laque augmentera la dureté, l'aspect vernissé et la brillance.

Une composition plus élaborée sera :
750 g d'alcool à 96°
350 g de gomme laque
30 g de baume du Pérou
250 g de benjoin.
ou encore :
1 l d'alcool à 96°
200 g de gomme laque
20 g de benjoin
cette formulation donnant un traitement moins dur et plus mat, en retrouvant pratiquement l'aspect du chocolat.

On pourra éventuellement terminer par un saupoudrage de sucre et autres opérations décoratives connues.

L'évaporation très rapide de l'alcool, grâce au procédé selon l'invention, est un avantage complémentaire car le produit obtenu présente un résidu alcoolique proche de zéro ce qui correspond aux tendances actuelles du marché.

### Aspect physique :

Liquide sirupeux proche de la viscosité d'un sirop titrant 40 - 45° au réfractomètre SS (solution sèche).

### Couleur :

Il se présente sous deux aspects différents au niveau de la couleur suivant les supports à traiter : soit d'un brun opaque, soit brun translucide (couleur proche de celle du cognac).

### Valeur gustative :

Effet éventuellement très légèrement craquant sous la dent rappelant la cristallisation d'un sirop, sans goût particulier.

L'homme de métier comprendra que, en partant de cette composition préférée et du but général de l'invention, on pourra faire varier le titre alcoolique, la viscosité etc... à condition d'obtenir le résultat recherché, ce qu'il est possible de vérifier par des essais de routine.

On pourra aussi utiliser des mélanges d'alcools, et naturellement incorporer des additifs tels que colorants et arômes solubles. Ces additifs seront choisis de manière tout à fait préférée dans la gamme des produits naturels, pour ne pas altérer l'un des avantages importants de l'invention, c'est-à-dire le caractère totalement naturel du produit.

Il n'existe pas de limite aux applications possibles. On citera toutes les pâtisseries ou biscuiteries fraîches ou sèches, tendres ou dures, etc...., sucrées ou salées, susceptibles de recevoir un floquage dans un but à la fois gustatif et de présentation.

On a réalisé par exemple des traitements de coupelles pour glaces, de biscuits, y compris déjà présentés dans leur papier de cuisson, génoises et autres.

### C. PROCEDE :

La mise en oeuvre de l'invention ne nécessite que peu de modifications de l'équipement : cuve de maintien en température, flexibles chauffants thermo-régulés pour le transport de la matière, buses d'application pré-définies en fonction de la cadence, animées éventuellement de mouvements oscillatoires en fonction des produits à revêtir, tapis à maille inox (s'il n'existe pas) au niveau de la zone de traitement.

### Floquage :

Floquage même partiel sur tous types de supports, même humides, en gérant de manière précise la quantité de revêtement sur le produit concerné.

De plus, la marge d'utilisation en température (de 29 à 39°C) est supérieure à tout produit existant actuellement sur le marché et permet ainsi une gestion simplifiée des problèmes de transport et d'application.

On utilisera un tapis toilé avec système de raclage.

### Application du floquage :

Cuve chauffante (à fournir ou déjà existante) : à bain-marie ou vide d'air, afin d'éviter le contact direct avec le matériel chauffant et avec brassage lent du produit.

Une pompe (type à définir en fonction de la cadence) pour le transfert jusqu'au point d'application.

Tuyau chauffant thermo-régulé entre 29 et 39°C.

Une ou plusieurs buses d'application par pulvérisation ou atomisation, pré-définies en fonction des besoins, avec mouvements oscillatoires ou déplacements latéraux également à définir en fonction des formes de produits à traiter, ou des moyens équivalents de pulvérisation ou atomisation.

L'invention concerne également, selon une variante, l'utilisation de tels moyens pour déposer la couche de floquage même sans le traitement ultérieur de cette couche.

Tunnel de refroidissement (en principe déjà existant sur les lignes de fabrication).

L'invention concerne également, selon une variante, le procédé séparé (c'est-à-dire sans le traitement ultérieur de la couche de floquage) d'application de la couche de floquage sur le support ou substrat, caractérisé en ce qu'il comprend la pulvérisation ou atomisation de la composition de floquage sur le support ou substrat par les moyens décrits ci-dessus.

### Traitement :

A appliquer dès que le floquage a acquis sa consistance définitive.

Il permet après un temps de séchage très court d'apporter un aspect brillant ou mat exceptionnel, de préserver les saveurs, de prévenir le collage aux emballages ainsi que les rayures du produit, facteur important pour la commercialisation, quelle que soit l'ambiance extérieure, ainsi que d'éviter au consommateur le désagrément des mains souillées. Elle augmente la conservation du produit traité en permettant de garantir à coup sûr la D.L.V., voire d'aller bien au-delà.

### Application du traitement :

A la sortie du tunnel de refroidissement, positionner l'atomiseur permettant l'application de la protection (buse définie en fonction des besoins).

Cela nécessite un tapis à mailles inox avec retour par un système de nettoyage sur base alcool.

Récipient d'alimentation en inox et alimentation de l'atomiseur par gravité et/ou aspiration.

L'invention concerne également, selon une autre variante, un procédé de traitement d'un support ou substrat du type décrit dans la présente demande, n'ayant pas reçu de couche de floquage, caractérisé en ce qu'on applique directement par pulvérisation ou atomisation, sur ledit support ou substrat, une composition alcoolique telle que définie ci-dessus.

## Revendications

1. Procédé pour un «floquage» amélioré de biscuits, viennoiseries, produits de boulangerie, pâtisseries, gaufres ou autres produits à pâte humide, et tout produit ou support alimentaire tendre ou dur analogue, **caractérisé en ce que** l'on effectue un floquage dudit support et **en ce que** l'on dépose sur la couche de floquage une composition comportant au moins une gomme laque de qualité alimentaire en solution dans au moins un alcool de qualité alimentaire.

2. Procédé selon la revendication 1, **caractérisé en ce que** la gomme laque est obtenue à partir d'une exsudation résineuse qui se solidifie sur les jeunes branches de végétaux de Rhamus jujuba.

3. Procédé selon la revendication 1, **caractérisé en ce que** la gomme laque est obtenue à partir d'une exsudation résineuse qui se solidifie sur les jeunes branches de végétaux de Fucus rengiosa.

4. Procédé selon l'une quelconque des revendications 1 à 3, **caractérisé en ce que** la composition comporte d'autres adjuvants solubles dans l'alcool, comme le baume du Pérou et/ou le benjoin.

5. Procédé selon l'une quelconque des revendications 1 à 4, **caractérisé en ce que** la composition de floquage est une combinaison de pâte à glacer noire, de couverture et de graisse végétale permettant l'application du floquage par pulvérisation ou atomisation.

6. Procédé selon la revendication 5, **caractérisé en ce que** la composition de floquage consiste en une combinaison qui permet de recourir à un procédé de pulvérisation ou atomisation:
1 kg de pâte à glacer noire connue de l'homme du métier
400 g de « couverture » également connue (beurre de cacao, cacao et sucre)
150g de graisse végétale qui modifie la texture et apporte la saveur selon le point de fusion de la graisse.

7. Procédé selon l'une quelconque des revendications 1 à 6, **caractérisé en ce que** la température d'application du floquage peut être choisie dans la plage de 29 à 39°C.

8. Procédé selon l'une quelconque des revendications 1 à 7, **caractérisé en ce que** la température d'application du floquage peut être choisie dans la plage de 29 à 39°C et le support (2) peut être refroidi jusqu'à 0°C ou une température inférieure.

9. Procédé selon l'une quelconque des revendications 1 à 8, **caractérisé en ce que** l'on applique ladite composition alcoolique de gomme laque dès que le floquage a atteint sa consistance naturelle à une température de 18 à 20°C.

10. Procédé selon l'une quelconque des revendications 1 à 9, **caractérisé en ce que** l'on assure un temps de contact de quelques secondes à quelques dizaines de secondes entre la couche de floquage et ladite composition alcoolique, avant de procéder à l'emballage du produit.

11. Procédé selon l'une quelconque des revendications 1 à 10, **caractérisé en ce que** le dépôt de ladite composition alcoolique s'effectue par pulvérisation ou atomisation sur la couche de floquage.

12. Procédé selon l'une quelconque des revendications 1 à 11, **caractérisé en ce que** le flocage appliqué est un « floquage chocolat ».

13. Procédé selon l'une quelconque des revendications 1 à 12, **caractérisé en ce qu'**il comprend la pulvérisation ou atomisation de la composition de floquage sur le support ou substrat par des moyens d'atomisation ou pulvérisation tels que des buses de préférence orientables.

14. Utilisation pour l'amélioration d'un floquage de biscuits, viennoiseries, produits de boulangerie, pâtisseries, gaufres ou autres produits à pâte humide, et tout produit alimentaire analogue, dans le cadre d'un procédé selon l'une quelconque des revendications 1 à 10, d'une composition **caractérisée en ce qu'**elle comprend une base d'au moins un alcool neutre de qualité alimentaire et au moins une gomme laque soluble dans ladite base alcool.

15. Utilisation d'une composition selon la revendication 14, **caractérisée en ce que** ladite composition consiste en
750 g d'alcool à 96°
350 g de gomme laque
donnant un titre au réfractomètre SS (Solution Sèche) de 40 - 45°.

16. Utilisation d'une composition selon la revendication 14, **caractérisée en ce que** ladite composition consiste en
750 g d'alcool à 96°
350 g de gomme laque
30 g de baume du Pérou
250 g de benjoin.

17. Utilisation d'une composition selon la revendication 14, **caractérisée en ce que** ladite composition consiste en
1 l d'alcool à 96°
200 g de gomme laque
20 g de benjoin

18. Utilisation ou procédé selon l'une quelconque des revendications 1 à 17, **caractérisée en ce que** ladite composition comporte de plus des arômes, additifs alimentaires usuels de préférence naturels et solubles dans la base alcool.

19. Appareillage pour le floquage amélioré de biscuits, viennoiseries, produits de boulangerie, pâtisseries, gaufres ou autres produits à pâte humide, et tout produit alimentaire analogue, du type comportant, après les moyens de mise en oeuvre de l'opération de floquage, un moyen d'application d'une composition alcoolique d'au moins une gomme laque réactive sur la couche de floquage, **caractérisé en ce qu'**il comporte ensuite un moyen pour assurer un temps de contact suffisant avant l'opération d'emballage pour laisser se former une structure légèrement rigide, de quelques secondes à quelques dizaines de secondes.

20. Appareillage selon la revendication 19, **caractérisé en ce qu'**il comporte des moyens d'application du floquage à une température pouvant être choisie entre 29 et 39°C.

21. Appareillage selon l'une quelconque des revendications 19 ou 20, **caractérisé en ce qu'**il comporte un tapis à maille inox et un système de lavage à base alcool et récupération de la composition alcoolique en retour, et des brouillards formés.

22. Appareillage selon l'une quelconque des revendications 19 à 21, **caractérisé en ce que** le floquage est lui même appliqué par une technique de pulvérisation ou atomisation.

23. Appareillage selon l'une quelconque des revendications 19 à 21, **caractérisé en ce** le floquage est lui même appliqué par une technique de pulvérisation ou atomisation en combinaison avec un enrobage préalable.

24. Procédé de traitement d'un support ou substrat du type décrit dans la revendication 1, n'ayant pas reçu de couche de floquage, **caractérisé en ce qu'**on applique directement par pulvérisation ou atomisation, sur ledit support ou substrat, une composition alcoolique telle que définie dans les revendications 14 à 18.

25. Produits de type biscuits, viennoiseries, produits de boulangerie, pâtisseries, gaufres ou autres produits à pâte humide, et tous produits alimentaires analogues, durs ou tendres, sucrés ou salés, **caractérisés en ce qu'**ils ont été obtenus par utilisation ou mise en oeuvre d'un procédé selon l'une quelconque des revendications 1 à 13, d'une composition telle que définie dans les revendications 14 à 18 et/ou d'un appareillage selon l'une quelconque des revendications 19 à 23.

## Patentansprüche

1. Verfahren für ein verbessertes Überziehen von Keksen, Hefegebäck, Backwaren, Kuchen, Waffeln und anderen Produkten aus feuchtem Teig und jedem ähnlichen harten oder weichen Nahrungsmittel oder -träger, **dadurch gekennzeichnet, dass** ein Überziehen des Trägers stattfindet, und dass auf die Überzugsschicht eine Zusammensetzung aufgebracht wird, die mindestens einen Gummilack mit Nahrungsmittelqualität als Lösung in mindestens einem Alkohol mit Nahrungsmittelqualität umfasst.

2. Verfahren nach Anspruch 1, **dadurch gekennzeichnet, dass** der Gummilack aus einer Harzexsudation gewonnen wird, die an den jungen Pflanzenzweigen von Rhamus jujuba fest wird.

3. Verfahren nach Anspruch 1, **dadurch gekennzeichnet, dass** der Gummilack aus einer Harzexsudation gewonnen wird, die an den jungen Pflanzenzweigen von Fucus rengiosa fest wird.

4. Verfahren nach einem der Ansprüche 1 bis 3, **dadurch gekennzeichnet, dass** die Zusammensetzung weitere in Alkohol lösliche Zusatzstoffe wie Perubalsam und/oder Benzoeharz umfasst.

5. Verfahren nach einem der Ansprüche 1 bis 4, **dadurch gekennzeichnet, dass** die Überzugszusammensetzung eine Kombination aus schwarzer Glasiermasse, Kuvertüre und Pflanzenfett ist, die das Aufbringen des Überzugs durch Aufsprühen oder Aufstäuben ermöglicht.

6. Verfahren nach Anspruch 5, **dadurch gekennzeichnet, dass** die Überzugszusammensetzung aus einer Kombination besteht, die es ermöglicht, auf ein Aufsprüh- oder Aufstäubungsverfahren zurückzugreifen:
1 kg schwarze Glasiermasse, die dem Fachmann bekannt ist
400 g ebenfalls bekannte "Kuvertüre" (Kakaobutter, Kakao und Zucker)
150 g Pflanzenfett, das die Textur verändert und je nach dem Schmelzpunkt des Fetts Geschmack verleiht.

7. Verfahren nach einem der Ansprüche 1 bis 6, **dadurch gekennzeichnet, dass** die Aufbringtemperatur des Überzugs im Bereich von 29 bis 39°C gewählt werden kann.

8. Verfahren nach einem der Ansprüche 1 bis 7, **dadurch gekennzeichnet, dass** die Aufbringtemperatur des Überzugs im Bereich von 29 bis 39°C gewählt werden kann und der Träger (2) bis auf 0°C oder eine niedrigere Temperatur abgekühlt werden kann.

9. Verfahren nach einem der Ansprüche 1 bis 8, **dadurch gekennzeichnet, dass** die alkoholische Gummilackzusammensetzung aufgebracht wird, sobald der Überzug bei einer Temperatur von 18 bis 20°C seine natürliche Konsistenz erreicht hat.

10. Verfahren nach einem der Ansprüche 1 bis 9, **dadurch gekennzeichnet, dass** eine Kontaktzeit von mehreren Sekunden bis mehreren zehn Sekunden zwischen der Überzugsschicht und der alkoholischen Zusammensetzung sichergestellt wird, bevor zur Verpackung des Produkts übergegangen wird.

11. Verfahren nach einem der Ansprüche 1 bis 10, **dadurch gekennzeichnet, dass** das Auftragen der alkoholischen Zusammensetzung durch Aufsprühen oder Aufstäuben auf die Überzugsschicht stattfindet.

12. Verfahren nach einem der Ansprüche 1 bis 11, **dadurch gekennzeichnet, dass** der aufgebrachte Überzug ein Schokoladenüberzug ist.

13. Verfahren nach einem der Ansprüche 1 bis 12, **dadurch gekennzeichnet, dass** es das Aufsprühen oder Aufstäuben der Überzugszusammensetzung auf den Träger oder die Unterlage durch Aufsprüh- oder Aufstäubungseinrichtungen wie vorzugsweise einstellbare Düsen umfasst.

14. Verwendung zur Verbesserung eines Überziehens von Keksen, Hefegebäck, Backwaren, Kuchen, Waffeln und anderen Produkten aus feuchtem Teig und jedem ähnlichen harten oder weichen Nahrungsmittel oder -träger im Rahmen eines Verfahrens nach einem der Ansprüche 1 bis 10 mit einer Zusammensetzung, **die dadurch gekennzeichnet ist, dass** sie eine Basis aus mindestens einem neutralen Alkohol mit Nahrungsmittelqualität und mindestens einen in der Alkoholbasis löslichen Gummilack umfasst.

15. Verwendung einer Zusammensetzung nach Anspruch 14, **dadurch gekennzeichnet, dass** die Zusammensetzung aus Folgendem besteht:
750 g Alkohol zu 96°
350 g Gummilack
ergibt einen Refraktometertiter TL (Trockenlösung) von 40-45°.

16. Verwendung einer Zusammensetzung nach Anspruch 14, **dadurch gekennzeichnet, dass** die Zusammensetzung aus Folgendem besteht:
750 g Alkohol zu 96°
350 g Gummilack
30 g Perubalsam
250 g Benzoeharz.

17. Verwendung einer Zusammensetzung nach Anspruch 14, **dadurch gekennzeichnet, dass** die Zusammensetzung aus Folgendem besteht:
1 l Alkohol zu 96°
200 g Gummilack
20 g Benzoeharz

18. Verwendung oder Verfahren nach einem der Ansprüche 1 bis 17, **dadurch gekennzeichnet, dass** die Zusammensetzung auch noch aromatische Substanzen, gewöhnliche, vorzugsweise natürliche und in der Alkoholbasis lösliche Nahrungsmittelzusätze enthält.

19. Vorrichtung zum verbesserten Überziehen von Keksen, Hefegebäck, Backwaren, Kuchen, Waffeln und anderen Produkten aus feuchtem Teig und jedem ähnlichen Nahrungsmittel, die nach den Einrichtungen zum Durchführen des Überzugsvorgangs, eine Einrichtung zum Aufbringen einer alkoholischen Zusammensetzung aus mindestens einem Gummilack umfasst, der auf die Überzugsschicht einwirkt, **dadurch gekennzeichnet, dass** sie danach eine Einrichtung umfasst, um vor dem Verpackungsvorgang eine ausreichende Kontaktzeit von mehreren Sekunden bis mehreren zehn Sekunden sicherzustellen, damit sich eine leicht steife Struktur bilden kann.

20. Vorrichtung nach Anspruch 19, **dadurch gekennzeichnet, dass** sie Einrichtungen zum Aufbringen des Überzugs bei einer Temperatur umfasst, die zwischen 29 und 39°C gewählt werden kann.

21. Vorrichtung nach einem der Ansprüche 19 oder 20, **dadurch gekennzeichnet, dass** sie ein Förderband mit Edelstahlgitter und ein System zum Waschen auf Alkoholbasis und zum Auffangen der alkoholischen Zusammensetzung beim Rückfließen und der entstandenen Dämpfe umfasst.

22. Vorrichtung nach einem der Ansprüche 19 bis 21, **dadurch gekennzeichnet, dass** der Überzug selbst durch ein Aufsprüh- oder Aufstäubungsverfahren aufgebracht wird.

23. Vorrichtung nach einem der Ansprüche 19 bis 21, **dadurch gekennzeichnet, dass** der Überzug selbst durch ein Aufsprüh- oder Aufstäubungsverfahren in Kombination mit einer vorherigen Umhüllung aufgebracht wird.

24. Bearbeitungsverfahren für einen Träger oder eine Unterlage des in Anspruch 1 beschriebenen Typs, der/die noch nicht überzogen ist, **dadurch gekennzeichnet, dass** auf den Träger oder die Unterlage direkt durch Aufsprühen oder Aufstäuben eine alkoholische Lösung wie in den Ansprüchen 14 bis 18 definiert aufgebracht wird.

25. Produkte von der Art von Keksen, Hefegebäck, Backwaren, Kuchen, Waffeln oder andere Produkte aus feuchtem Teig, und alle ähnlichen, harten oder weichen, süßen oder salzigen Nahrungsmittel, **dadurch gekennzeichnet, dass** sie durch Verwendung oder Durchführung eines Verfahrens nach einem der Ansprüche 1 bis 13, mit einer wie in den Ansprüchen 14 bis 18 definierten Zusammensetzung und/oder mit einer Vorrichtung nach einem der Ansprüche 19 bis 23 gewonnen wurden.

## Claims

1. A process for improved "flocking" of biscuits, Viennese pastries, bakery products, pastries, waffles or other products with a wet dough, and any similar soft or hard food product or support, **characterised in that** flocking of said support is performed and **in that** there is applied onto the layer of flocking a composition comprising at least one food grade gum lac in solution in at least one food grade alcohol.

2. A process according to claim 1, **characterised in that** the gum lac is obtained from a resinous exudation which solidifies on the young branches of Rhamnus jujuba plants.

3. A process according to claim 1, **characterised in that** the gum lac is obtained from a resinous exudation which solidifies on the young branches of Fucus rengiosa plants.

4. A process according to any one of claims 1 to 3, **characterised in that** the composition comprises other alcohol-soluble additives, such as Peruvian balsam and/or gum benzoin.

5. A process according to any one of claims 1 to 4, **characterised in that** the flocking composition is a combination of dark chocolate glaze, couverture and vegetable fat which permits the flocking to be applied by spraying or atomisation.

6. A process according to claim 5, **characterised in that** the flocking composition consists of a combination which permits the use of a spraying or atomisation process:
1 kg of dark chocolate glaze known to the person skilled in the art
400 g of likewise known "couverture" (cocoa butter, cocoa and sugar)
150 g of vegetable fat which modifies texture and adds flavour depending upon the melting point of the fat.

7. A process according to any one of claims 1 to 6, **characterised in that** the application temperature for the flocking may be selected within the range from 29 to 39°C.

8. A process according to any one of claims 1 to 7, **characterised in that** the application temperature for the flocking may be selected within the range from 29 to 39°C and the support (2) may be cooled to a temperature of 0°C or lower.

9. A process according to any one of claims 1 to 8, **characterised in that** said alcoholic gum lac composition is applied as soon as the flocking has achieved its natural consistency at a temperature of 18 to 20°C.

10. A process according to any one of claims 1 to 9, **characterised in that** a contact time of several seconds to several tens of seconds between the flocking layer and said alcoholic composition is provided before packaging the product.

11. A process according to any one of claims 1 to 10, **characterised in that** said alcoholic composition is applied by spraying or atomisation onto the flocking layer.

12. A process according to any one of claims 1 to 11, **characterised in that** the flocking applied is "chocolate flocking".

13. A process according to any one of claims 1 to 12, **characterised in that** it comprises spraying or atomisation of the flocking composition onto the support or substrate by atomisation or spraying means such as preferably directable nozzles.

14. Use for improving flocking of biscuits, Viennese pastries, bakery products, pastries, waffles or other products with a wet dough, and any similar food product in the context of a process according to any one of claims 1 to 10, of a composition **characterised in that** it comprises a base of at least one food grade neutral alcohol and at least one gum lac soluble in said alcohol base.

15. Use of a composition according to claim 14, **characterised in that** said composition consists of
750 g of 96° alcohol
350 g of gum lac
yielding a dry solution refractometer reading of 40-45°.

16. Use of a composition according to claim 14, **characterised in that** said composition consists of
750 g of 96° alcohol
350 g of gum lac
30 g of Peruvian balsam
250 g of gum benzoin.

17. Use of a composition according to claim 14, **characterised in that** said composition consists of
1 l of 96° alcohol
200 g of gum lac
20 g of gum benzoin.

18. Use or process according to any one of claims 1 to 17, **characterised in that** said composition additionally comprises flavours, conventional food additives which are preferably natural and soluble in the alcohol base.

19. An apparatus for the improved flocking of biscuits, Viennese pastries, bakery products, pastries, waffles or other products with a wet dough, and any similar food product, of the type comprising, downstream from the flocking performance means, a means for the application of an alcoholic composition of at least one gum lac reactive with the flocking layer, **characterised in that** it then comprises means for providing sufficient contact time of some seconds to some tens of seconds before packaging to allow the formation of a slightly rigid structure.

20. An apparatus according to claim 19, **characterised in that** it comprises means for application of the flocking at a temperature which can be selected between 29 and 39°C.

21. An apparatus according to any one of claims 19 or 20, **characterised in that** comprises a stainless steel mesh belt and a system for alcohol-based cleaning and recovery of the recirculated alcoholic composition and any mists formed.

22. An apparatus according to any one of claims 19 to 21, **characterised in that** the flocking is itself applied by a spraying or atomisation technique.

23. An apparatus according to any one of claims 19 to 21, **characterised in that** the flocking is itself applied by a spraying or atomisation technique in combination with prior coating.

24. A process for the treatment of a support or substrate of the type described in claim 1 which has not received a flocking layer, **characterised in that** an alcoholic composition as defined in claims 14 to 18 is applied directly by spraying or atomisation onto said support or substrate.

25. Products of the type biscuits, Viennese pastries, bakery products, pastries, waffles or other products with a wet dough, and any similar food products, whether hard or soft, savoury or sweet, **characterised in that** they are obtained by use or performance of a process according to any one of claims 1 to 13, of a composition as defined in claims 14 to 18 and/or of an apparatus according to any one of claims 19 to 23.
